# EUROPÄISCHE PATENTANMELDUNG

(11) **EP 1 500 871 A2**
(43) Veröffentlichungstag der Anmeldung: **26.01.2005**
(21) Anmeldenummer: 04015051.8
(22) Anmeldetag: 26.06.2004
(51) Int. Cl.: F21V 5/04, F21W 101/10, G02B 5/02

(54) **Beleuchtungseinrichtung, Linse und Herstellung der Linse**

(30) Priorität: 23.07.2003 DE 10333370
(71) Anmelder: SCHOTT AG, 55122 Mainz (DE)
(72) Erfinder: Brinkmann, Matthias, Dr., 55268 Nieder-Olm (DE); Pawlowski, Edgar, 55271 Stadtecken-Elsheim (DE); Beier, Wolfram, Prof. Dr., 55270 Essenheim (DE); Harmgardt, Rolf, 31061 Alfeld/Leine (DE)
(74) Vertreter: Fuchs Mehler Weiss & Fritzsche

(57) **Zusammenfassung**

Für Autoscheinwerfer gelten strenge Prüfnormen. Zum Beispiel ist zum einen definiert, welche Farbe das Scheinwerferlicht insbesondere an der Hell-Dunkel-Grenze haben darf, und zum anderen, wie viel Streulicht sich im Dunkelbereich befinden darf. Um beiden Anforderungen gerecht zu werden, wird erfindungsgemäß eine Linse (5) vorgeschlagen, die auf mindestens einer ihrer Flächen eine diffraktive Struktur (8) aufweist, wobei im, in einem Scheinwerfer eingebauten Zustand, die diffraktive Struktur im Wesentlichen im nichtabgeblendeten Bereich der Linse (5) angeordnet ist.

## Beschreibung

Die Erfindung betrifft eine Beleuchtungseinrichtung, insbesondere für den Automobilbereich, mit einer Lichtquelle, einer Linse, die auf mindestens einer ihrer Flächen eine diffraktive Struktur aufweist, und einer zwischen Lichtquelle und Linse angeordneten Blende. Ferner betrifft die Erfindung eine Linse für die eben genannte Beleuchtungseinrichtung sowie ein Verfahren zur Herstellung dieser Linse.

Aus der DE 42 15 485 A1 ist eine Beleuchtungseinrichtung bekannt, die eine Lichtquelle, einen Reflektor und eine Lichtscheibe aufweist. Im Strahlengang zwischen der Lichtquelle und der Lichtscheibe ist ein Beugungsgitter angeordnet, durch das das von der Lichtquelle ausgesandte und vom Reflektor reflektierte Licht beeinflusst wird. Das Beugungsgitter weist Bereiche mit Mikroprismen als Beugungselemente auf, durch die Licht gezielt in eine bestimmte Richtung abgelenkt wird. In anderen Bereichen des Beugungsgitters sind die beugungsoptischen Elemente als Streuelemente ausgebildet, durch die Licht gleichmäßig in einem bestimmten Winkelbereich gestreut wird. Eine derartige Beleuchtungseinrichtung kann zum Beispiel als Autoscheinwerfer eingesetzt werden.

Auf dem in der DE 42 15 584 A1 beschriebenen Prinzip basieren Scheinwerfer mit Paraboloidreflektor. Sie bestehen aus einer Lampe, einem Paraboloidreflektor, einer Blende und einer Streulichtscheibe, die in die Frontscheibe eingebaut ist.

Eine vergleichbare Autosignalleuchte wird auch in der FR 2 785 364 A1 beschrieben. Diese Leuchte besteht im Wesentlichen aus einer Lichtquelle und einem Schirm, der zumindest in einem Teilbereich diffraktive Elemente aufweist, um einen aufgeweiteten Lichtstrahl zu erzeugen, dessen Winkelverteilung kontinuierlich ist. Der Schirmbereich ist in Blöcke aufgeteilt, die jeder eine diffraktive Struktur aufweisen. Durch die Aufteilung in einzelne Blöcke, die alle die gleiche Lichtverteilung erzeugen, lässt sich ein sehr homogener Lichtstrahl erzeugen.

Aus der DE 35 07 013 A1 ist ein Scheinwerfer für Abblendlicht oder Nebellicht von Kraftfahrzeugen bekannt, der ein nicht farbkorrigiertes Objekt aufweist, das die Blendenkante als Hell-Dunkel-Grenze eines Lichtbündels auf der Fahrbahn abbildet, sowie ein Projektionselement aufweist, das die einen Farbsaum an der Hell-Dunkel-Grenze bildenden Strahlen des Lichtbündels in dessen Hellbereich lenkt. Indem sich die Lichtbündel unterschiedlicher Farbe wieder mischen, wird das vom Gesetzgeber vorgeschriebene Weißlichtbündel ohne den störenden Farbsaum erzeugt. Verwendet man ein Korrektionselement, das das aus dem Objektiv austretende Lichtbündel in Differentiallichtbündel, d. h. in sehr viele kleine Lichtbündel aufteilt, erhält man eine weiße Hell-Dunkel-Grenze mit einer leichten Färbung. Ein entsprechendes Korrektionselement weist Zylinderlinsen oder Ringlinsen auf, die als Sammellinsen oder Zerstreuungslinsen mit unterschiedlicher Brechkraft und/oder Breite ausgeführt sind. Diese Linsen brauchen die Nutzflächen des Korrektionselementes nur teilweise zu bedecken. Das Objektiv und das Korrektionselement können aus einem Stück hergestellt sein, wobei insbesondere die Seite des Objektivs mit dem Korrektionselement durch Pressen hergestellt ist.

Seit Mitte der 80er Jahre wird für Automobile der Ober- und oberen Mittelklasse der so genannte Poly-Ellipsiod-Scheinwerfer (PES) angeboten, der anstelle der Streulichtscheibe eine Plan-Asphäre als Linse besitzt, die auf einen Dreifach-Ellipsoid-Reflektor oder in neuerer Zeit auch auf Freiformflächenreflektoren abgestimmt ist.

Ein derartiger PES ist zum Beispiel in der WO 99/00623 A1 beschrieben. Der dort beschriebene Kfz-Scheinwerfer besteht im Wesentlichen aus einer Lichtquelle und einer Linse. Die Linse weist eine nicht-holografische Oberflächenstruktur auf, die als diffraktive Mikrostruktur wirkt. Vorzugsweise werden refraktive Elemente, d. h. Linsen, mit einer diffraktiven Mikrostruktur versehen. Das so entstehende refraktive-diffraktive Element kann derart ausgelegt werden, das über die diffraktive Mikrostruktur gewisse optische Funktionen erfüllt werden, die dazu führen, dass das refraktive Element insgesamt dünner und ohne Dickenvariation hergestellt werden kann. Die wichtigsten optischen Funktionen basieren auf gesetzlichen Vorgaben, die vorschreiben, in welche Richtung der Strahl gelenkt werden soll und welche Intensitätsverteilung er über die Fläche aufweisen muss. Weitere Parameter, die über das Design der diffraktiven Mikrostruktur gesteuert werden können, sind die Uniformität, die Farbe und das Streulicht. Für die Farbkorrektur wird ausgenutzt, dass bei der Brechung blaues Licht am stärksten gebrochen wird und bei der Beugung rotes Licht am stärksten gebeugt wird. Indem man das Design der Linse und der diffraktiven Mikrostruktur aufeinander abstimmt, können die chromatischen Aberrationen beider Elemente kompensiert werden. Auf diese Art und Weise wird gemäß der WO 99/00623 A1 auch das Streulicht kompensiert. Ferner wird vorgeschlagen, die diffraktive Mikrostruktur dazu zu nutzen, das Licht von Signalleuchten mit Mustern zu versehen, zum Beispiel könnte bei Automobilen die Marke des Herstellers in den Brems- oder Rücklichtern zum Erscheinen gebracht werden. Über die diffraktive Mikrostruktur kann auch gezielt die Farbe des Lichtstrahls eingestellt werden. So könnte man sich vorstellen, über verschiedene diffraktive Mikrostrukturen verschiedene Farben für entsprechende Anwendungen in eine Leuchte zu integrieren.

Frontscheinwerfer für Abblendlicht erzeugen generell eine Lichtverteilung, die breiter als höher sein muss. Beim PES wird dies hauptsächlich durch einen Dreifach-Ellipsoid-Reflektor mit unterschiedlichen Halbachsen erzeugt. Die obere Hälfte des Lichtstrahls wird durch eine Blende ausgeblendet und durch die Linse auf die Strasse projiziert. Hierdurch wird in einer Entfernung von ca. 10 Metern ein scharfes Abbild der Blende erzeugt. Der Übergang zwischen dem ausgeleuchteten und dem von der Blende abgeschnittenen Bereich wird dabei als Hell-Dunkel-Grenze bezeichnet. Diese Hell-Dunkel-Grenze ist bei PES deutlich schärfer einstellbar als bei Scheinwerfern mit Paraboloidreflektor. In den Prüfnormen wird die Lichtverteilung eines Scheinwerfers auf einer 25 Meter entfernten Messwand in verschiedene Zonen eingeteilt und eine Vielzahl von Prüfpunkten definiert. Ein bedeutender Parameter ist die Beleuchtungsstärke im so genannten HV-Punkt, der 25 cm oberhalb der Hell-Dunkel-Grenze in der Mitte des Lichtstrahls liegt. Dort darf die Beleuchtungsstärke einen definierten Wert nicht überschreiten. Der HV-Punkt liegt im Dunkelbereich der Lichtverteilung. Bei zu unscharfer Abbildung verbreitert sich die Hell-Dunkel-Grenze und die Beleuchtungsstärke im HV-Punkt übersteigt den zulässigen Grenzwert. Die Beleuchtungsstärke im HV-Punkt ist somit auch ein Maß für das Streulicht. Bisher ist es sehr schwierig, bei Einhaltung aller übrigen Prüfnormen beim HV-Punkt unter dem zulässigen Grenzwert zu bleiben.

Es ist Aufgabe der vorliegenden Erfindung eine Beleuchtungseinrichtung bzw. eine dafür geeignete Linse bereitzustellen, die gewährleisten, dass die Beleuchtungsstärke im HV-Punkt möglichst niedrig ist.

Gelöst wird diese Aufgabe durch eine Beleuchtungseinrichtung gemäß Anspruch 1 sowie durch Linsen gemäß den Ansprüchen 9 und 10 und ein Verfahren gemäß Anspruch 14.

Erstaunlicherweise hat sich herausgestellt, dass der Streulichtanteil im HV-Punkt dadurch reduziert werden kann, dass in dem Bereich der Linse, der von der Lichtquelle primär nicht ausgeleuchtet wird, da dieser Bereich durch die Blende ausgeblendet wird, die diffraktive Struktur einfach weggelassen wird. Vergleichsmessungen zwischen Linsen, die über ihre gesamte Oberfläche eine diffraktive Mikrostruktur aufweisen, und Linsen, die diese diffraktive Mikrostruktur im Wesentlichen nur im ausgeleuchteten Bereich aufweisen, haben gezeigt, dass dadurch eine Verbesserung im HV-Punkt um einen Faktor 10 erreicht werden kann, d. h. die Beleuchtungsstärke in Lux um einen Faktor 10 niedriger wird. Besonders überraschend ist bei der vorliegenden Erfindung, dass durch eine - rückschauend betrachtet - sehr einfache Maßnahme ein derart starker Effekt erreicht werden kann.

Vorteilhafterweise ist die diffraktive Struktur auf der Innenseite, also der der Lichtquelle zugewandten Seite der Linse angeordnet. Dadurch wird die diffraktive Struktur vor mechanischen Einwirkungen und Verschmutzungen geschützt.

Dies bietet sich insbesondere an, wenn es sich bei der Linse um eine Linse handelt, die auf der der Lichtquelle zugewandten Seite plan und auf der der Lichtquelle abgewandten Seite konvex ist. Denn auf einer planen Fläche lässt sich eine diffraktive Struktur leichter aufbringen. Befindet sich die diffraktive Struktur auf einer planen Fläche lässt sich auch die diffraktive Struktur separat auf einer Folie produzieren, die beispielsweise durch Kleben auf der planen Seite der Linse befestigt werden kann.

Es kann allerdings auch von Vorteil sein, die diffraktive Struktur auf der konvexen Seite vorzusehen. Zwar sind die entsprechenden Werkzeuge komplizierter, gewährleisten aber in der Regel eine bessere Temperaturkontrolle. Dies wirkt sich insbesondere bei der Massenfertigung positiv aus.

Bei den üblichen PES, die eine im Querschnitt kreisförmige Linse aufweisen und bei denen die untere Hälfte weggeblendet wird, hat es sich als besonders vorteilhaft erwiesen, wenn die Fläche der diffraktiven Struktur der Fläche eines Halbkreises entspricht.

Ganz besonders bevorzugt ist es, den Verlauf der Grenze zwischen Fläche mit diffraktiver Struktur und Fläche ohne diffraktiver Struktur entsprechend der Geometrie der Blende verlaufen zu lassen. Auf diese Weise lässt sich der Streulichtanteil im Dunkelbereich des Scheinwerferlichtes optimal reduzieren.

Aus fertigungstechnischer Sicht ist es von Vorteil, wenn die Fläche der diffraktiven Struktur der Fläche eines halben Kreisringes entspricht. Wenn nämlich die Linse mit diffraktiver Struktur durch Pressen erzeugt wird, bildet sich in der Mitte der planen Seite ein Einzug. Indem man dort gar nicht erst eine diffraktive Struktur vorsieht, wird ermöglicht, die Linse mit diffraktiver Struktur ohne weiteren Aufwand in einem Pressschritt herzustellen. Bei dem Design der Linse und der diffraktiven Struktur muss dann das Design dahingehend optimiert werden, dass dennoch der Streulichtanteil im Dunkefbereich nicht so hoch wird.

Die Linse kann aus Glas, bevorzugt oxidische oder silikatische Multikomponentengläser, bestehen und durch Pressen eines Glasposten hergestellt werden. Die erfindungsgemäße Linse lässt sich aber auch aus Kunststoff z. B. durch Spritzgießen bzw. UV- und Heißprägeverfahren fertigen. Letztere Verfahren gewährleisten eine hohe Formtreue. Bezüglich der Kunststoffe werden transparente und Langzeit-stabile Kunststoffe bevorzugt. Besonders bevorzugt sind z. B. Polymethylmethacrylimid (PMMI), das eine hohe Temperaturbeständigkeit aufweist, oder auch Cycloolefincopolymere (COC) oder Cycloolefinpolymere (COP), die kein Wasser aufnehmen.

In einer besonders bevorzugten Ausführungsform weist die Linse im abgeblendeten Bereich ein computergeneriertes Hologramm (CGH) auf. Mit dessen Hilfe kann die erfindungsgemäße Beleuchtungseinrichtung zusätzliche Funktionen übernehmen. So kann z. B. mit Hilfe des CGH ein Logo auf die Abblendscheibe oder die Strasse projiziert werden. Die Funktionsfähigkeit der Beleuchtungseinrichtung, sei es der Linse, sei es der Lichtquelle, kann kontrolliert werden. Es kann die Nachtsicht verbessert werden, der Abstand gemessen werden oder auch die Detektion von Regen oder Schnee ermöglicht werden. Für alle diese Anwendungen ist eine Lichtquelle notwendig. Dabei kann es sich z. B. um einen Laser im benötigten Wellenlängenbereich handeln. Es kann aber auch das Licht der Lichtquelle der Beleuchtungseinrichtung verwendet werden, das gegebenenfalls über Lichtfasern ans das CGH geführt wird. Durch den zusätzlichen Einbau von Transceivern lässt sich auch eine optische Datenkommunikation mit anderen Autos ermöglichen.

In einer weiteren bevorzugten Ausführungsform ist durch Variierung der Phasenfunktion und/oder der Strukturtiefe der diffraktiven Struktur der Farbsaum an der Hell-Dunkel-Grenze auf eine spezifische Farbe, die nicht weiß ist, eingestellt. Dies kann dazu dienen, dass der Gegenverkehr schon von weitem erkennt, um welchen Fahrzeugtyp es sich beim entgegenkommenden Fahrzeug handelt oder mit welcher Geschwindigkeit sich entgegenkommende oder nachfahrende Autos bewegen. Dies würde insbesondere beim Überholen nachts die Sicherheit erhöhen. Automobilhersteller könnten unterschiedliche Farben auch als Erkennungsmerkmal für ihre Produkte verwenden.

Die erfindungsgemäße Beleuchtungseinrichtung lässt sich mit beliebigen Lichtquellen betreiben, wie zum Beispiel Photodioden oder Licht, das über Glasfasern herangebracht worden ist, das also teilweise schon gut gebündelt ist. Im Automobilbereich werden bevorzugt nach wie vor konventionelle Leuchten eingesetzt, deren Leuchtkraft am besten ausgenutzt wird, wenn die Lichtquelle in einem Reflektor angeordnet ist. Besonders bevorzugt sind dabei die bereits bekannten Dreifach-Ellipsoid-Reflektoren.

Die Erfindung soll anhand der folgenden Figuren näher erläutert werden.
Figur 1 zeigt perspektivisch den Aufbau eines herkömmlichen DE-Scheinwerfers;
Figur 2 zeigt den Strahlengang in einem DE-Scheinwerfer;
Figur 3 zeigt, an welcher Stelle der HV-Punkt gemessen wird;
Figur 4a zeigt das geometrische Design einer ersten erfindungsgemäßen Linse;
Figur 4b zeigt die Anordnung dieser ersten erfindungsgemäßen Linse in einer Beleuchtungseinrichtung;
Figur 5 zeigt das geometrische Design einer zweiten erfindungsgemäßen Linse;
Figur 6 zeigt das geometrische Design einer dritten erfindungsgemäßen Linse;
Figur 7 zeigt das geometrische Design einer vierten erfindungsgemäßen Linse und
Figuren 8 bis 12, 13a, b zeigen Anwendungen einer Linse mit CGH.

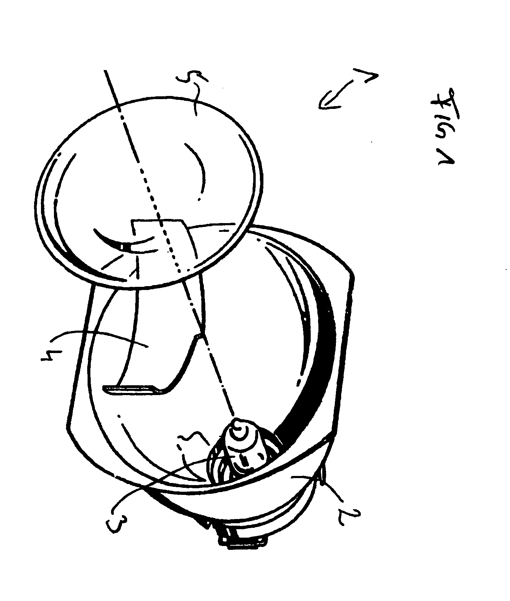

Figur 1 zeigt den prinzipiellen Aufbau eines DE-Scheinwerfers. Der DE-Scheinwerfer 1 besteht aus einem Polyellipsoid-Reflektor 2, einer Halogenleuchte 3, einer Blende 4 und einer Linse 5. Die Blende 4 ist im Strahlengang zwischen der Halogenleuchte 3 und der Linse 5 angeordnet. Die üblich benutzten Blenden 4 schatten die untere Hälfte des Lichtstrahles ab, so dass das Scheinwerferlicht nach Austritt hinter der Linse 5 eher den Boden beleuchtet. Durch die Abstufung der Oberkante der Blende 4 wird erreicht, dass der Lichtstrahl insbesondere nach rechts unten gelenkt wird, um den Gegenverkehr möglichst wenig zu blenden.

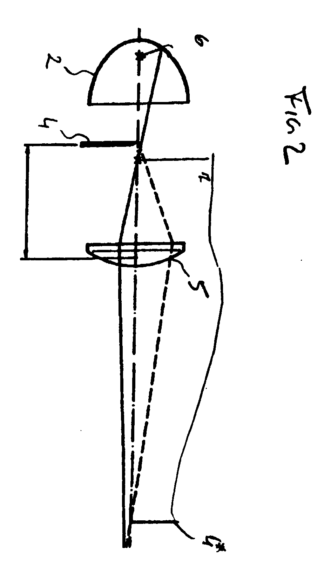

Der Strahlengang eines DE-Scheinwerfers ist in Figur 2 dargestellt. In einem ersten Brennpunkt 6 ist eine Leuchte 2 in einem Reflektor 2 angeordnet. Durch die ellipsoide Form des Reflektors wird das Licht in einem zweiten Brennpunkt fokusiert, der kurz hinter der Blende 4 liegt. Danach passieren die einzelnen Lichtstrahlen die Linse 5 und erzeugen eine Abbildung der Blende 4*.

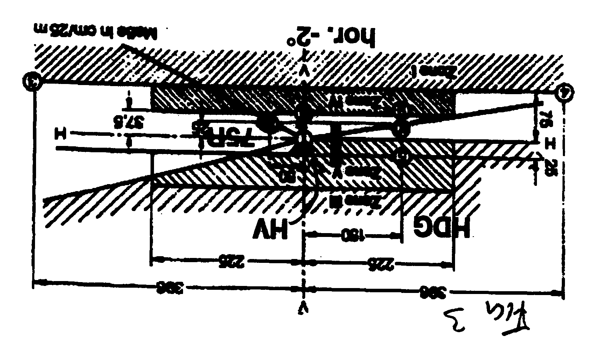

Der entscheidende Parameter ist die Beleuchtungsstärke im HV-Punkt. Wie aus Figur 3 ersichtlich liegt der HV-Punkt 25 cm oberhalb des ausgeleuchteten Bereiches in 25 Metern hinter der Linse. In horizontaler Richtung befindet sich der HV-Punkt genau über der Stufe der Hell-Dunkel-Grenze, die durch die Abstufung der Kante der Blende 4 erzeugt wird.

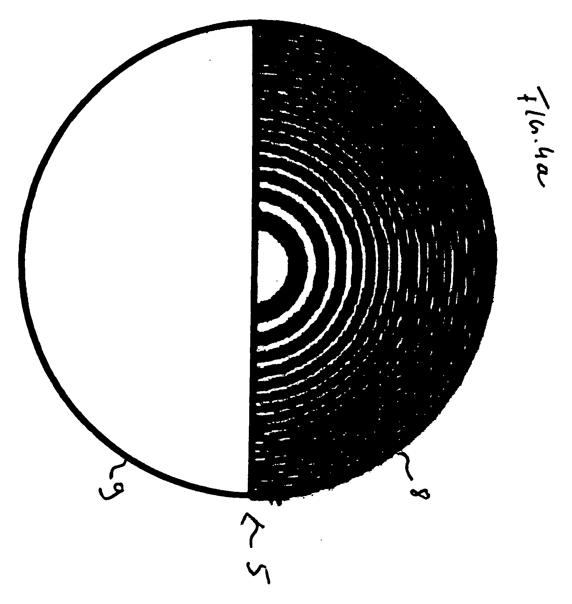

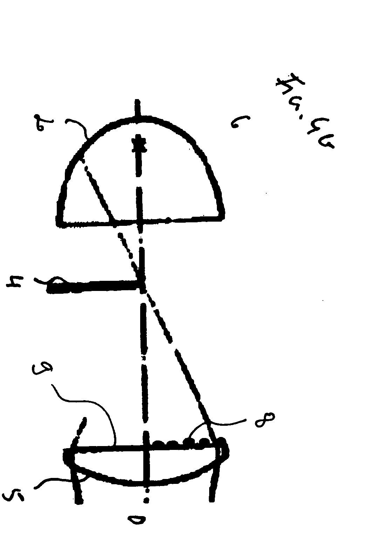

Figur 4a zeigt eine erfindungsgemäße Linse 5, die einen Bereich 8 mit diffraktiver Struktur und einen Bereich 9 ohne diffraktive Struktur aufweist. Diese Linse 5 wird derart in den Strahlengang eingebaut, dass sich der Bereich 8 mit diffraktiver Struktur oberhalb der optischen Achse O und der Bereich 9 ohne diffraktive Struktur unterhalb der optischen Achse O befindet (siehe Figur 4b).

Es wurden Messungen an der soeben beschriebenen erfindungsgemäßen Linse 5 und an herkömmlichen Linsen durchgeführt, die auf ihrer gesamten planen Fläche eine diffraktive Struktur entsprechend der diffraktiven Struktur im Bereich 8 der erfindungsgemäßen Linse 5 aufwiesen. Diese Messungen wurden bei gleichem Aufbau und identischen Randbedingungen durchgeführt. Bei der bekannten Linse, die über die gesamte Fläche eine diffraktive Struktur aufwies, wurden über 10 Lux im HV-Punkt gemessen. Bei der in Figur 4a dargestellten Linse 5 wurden nur 1,4 Lux im HV-Punkt gemessen. Ferner wurde festgestellt, dass die Diskrepanz zwischen simulierter Beleuchtungsstärke im HV-Punkt und gemessener Beleuchtungsstärke im HV-Punkt unter 40 % liegt. Dies ist bei derart geringen Beleuchtungsstärken ein sehr guter Wert.

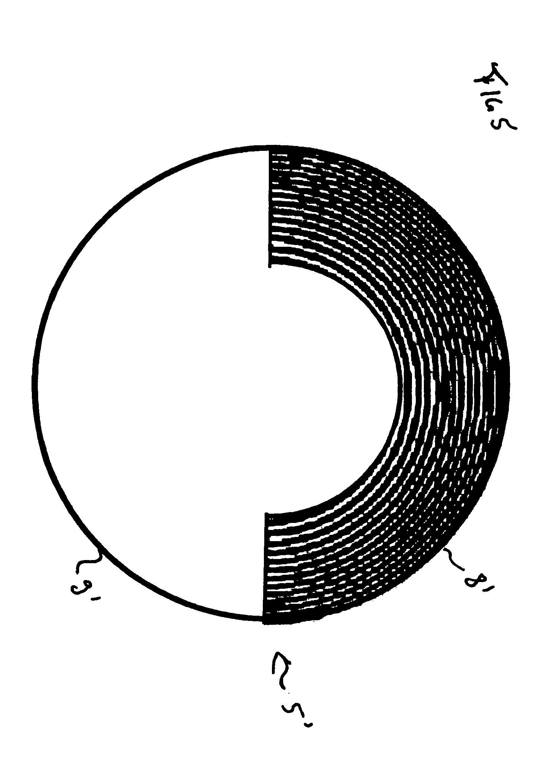

Die in Figur 5 dargestellte Linse 5' weist einen diffraktiven Bereich 8' auf, dessen Fläche der Fläche eines halben Kreisringes entspricht. Die Fläche 9' ohne diffraktive Struktur ist dazu komplementär. Diese Linse 5 wurde durch Pressen eines schmelzflüssigen Glasposten in einem Schritt hergestellt. Dabei wurde sowohl die Linse an sich geformt als auch die diffraktive Struktur aufgebracht. Da wegen des Einziehens in der Mitte beim Pressen diffraktive Strukturen, die sich im Mikrometerbereich bewegen, nicht aufgebracht werden können, wird dort auf eine diffraktive Struktur verzichtet. Die Reduzierung des Streulichtanteils im HV-Punkt ist dennoch bedeutend.

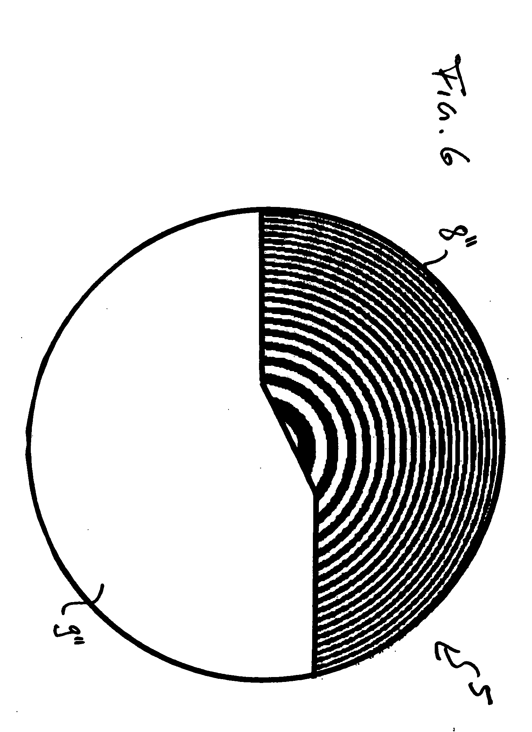

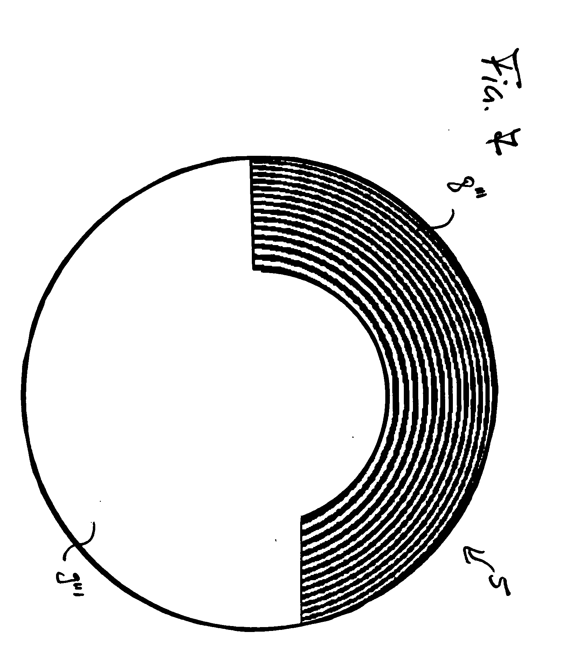

In den Figuren 6 und 7 sind Linsen 5" und 5"' mit modifizierter diffraktiver Struktur 8", 8"' dargestellt. Diese Linsen 5", 5"' unterscheiden sich von den bereits in den Figuren 4a und 5 dargestellten Linsen 5, 5' dahingehend, dass die mit diffraktiver Struktur 8", 8"' an den Kantenverlauf der Blende angepasst wurde. Dadurch wird eine zusätzliche, messbare Verringerung der Helligkeit im HV-Punkt erreicht. Die in den Figuren 6 und 7 dargestellte Geometrie ist für Rechtsverkehr, bei Linksverkehr müsste sie gespiegelt werden.

Die nicht mit diffraktiver Struktur versehene Fläche 9, 9', 9", 9"' der Linse 5, 5', 5", 5''' lässt sich nutzbar machen, indem dort ein computergeneriertes Hologramm angeordnet wird.

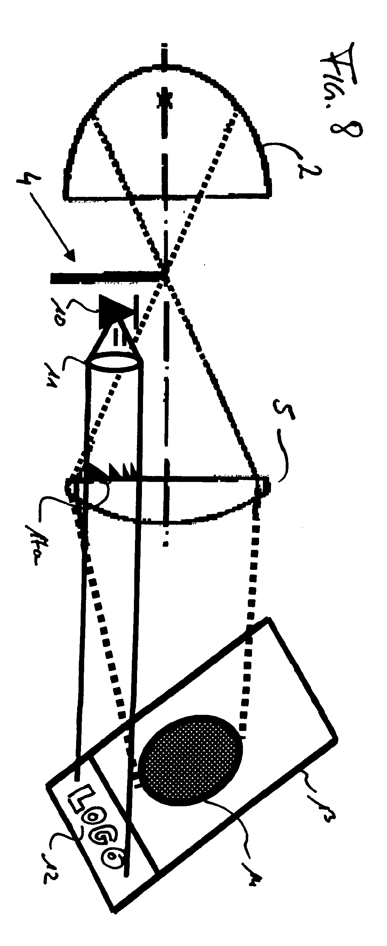

In Figur 8 wird mit Hilfe des computergenerierten Hologramms 17a ermöglicht, mit Hilfe des hinter der Blende 4 angeordneten Lasers 10 und der Mikrooptik 11 auf die Abdeckscheibe 13 des Scheinwerfers ein Logo 12 zu projizieren. Diese Projektion erfolgt unterhalb des eigentlichen Lichtbündels 14 auf der Abdeckscheibe 13. Insbesondere bei abgestelltem Wagen wäre diese Projektion auch auf der Strasse sichtbar. Das computergenerierte Hologramm 17a ist dementsprechend ausgebildet.

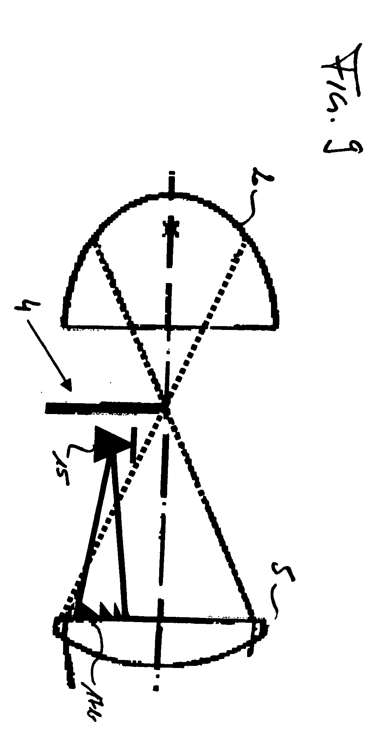

Bei der in Figur 9 gezeigten Ausführungsform dient das computergenerierte Hologramm 17b in Verbindung mit dem Detektor 15 zur Kontrolle des Lampenalters. Je nachdem, wie Detektor 15 und computergeneriertes Hologramm 17b zueinander angeordnet sind, wird primär die Leuchtkraft der Lichtquelle und damit ihr Alter bestimmt oder die sich auf die Lichtleistung auswirkende Alterungen der Linse 5 überwacht. Das CGH 17b ist dabei derart angeordnet, dass das entsprechende Licht auf den Detektor 15 fokusiert wird.

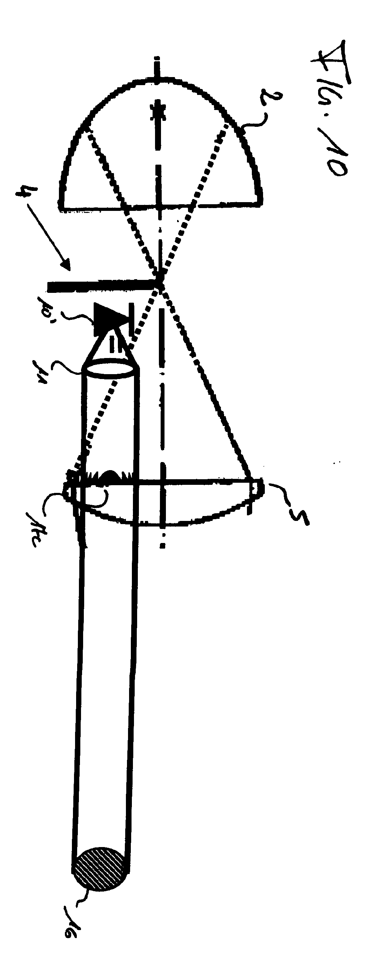

Bei Verwendung eines Infrarot-Lasers 10' in Verbindung mit dem CGH 17c kann, wie in Figur 10 gezeigt, die Nachtsicht verbessert werden. Dazu wird die Strasse mit Infrarotlicht 16 beleuchtet. Mit Hilfe einer nicht dargestellten Kamera wird das entsprechende Infrarotbild der Strasse aufgenommen und entweder über einen Monitor oder durch Projektion auf die Windschutzscheibe dem Fahrer angezeigt.

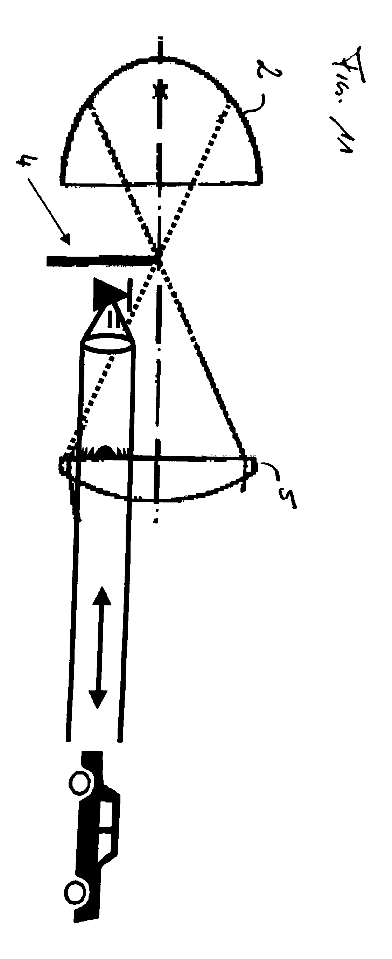

Ebenfalls mit Hilfe eines Infrarot-Lasers 10' kann mit Hilfe des CGH 17d auch der Abstand zu einem vor dem Scheinwerfer befindlichen Gegenstand 18 gemessen werden (Fig. 11). Wenn mit Hilfe eines nicht dargestellten Detektors zeitaufgelöst das reflektierte Signal gemessen wird, d. h. der Laser 10' als Radar verwendet wird, lässt sich der Abstand zu beispielsweise einem vorausfahrenden Auto bestimmen. Diese Information kann über einen Bordcomputer genutzt werden, um beim Fahren einem Mindestabstand einzuhalten.

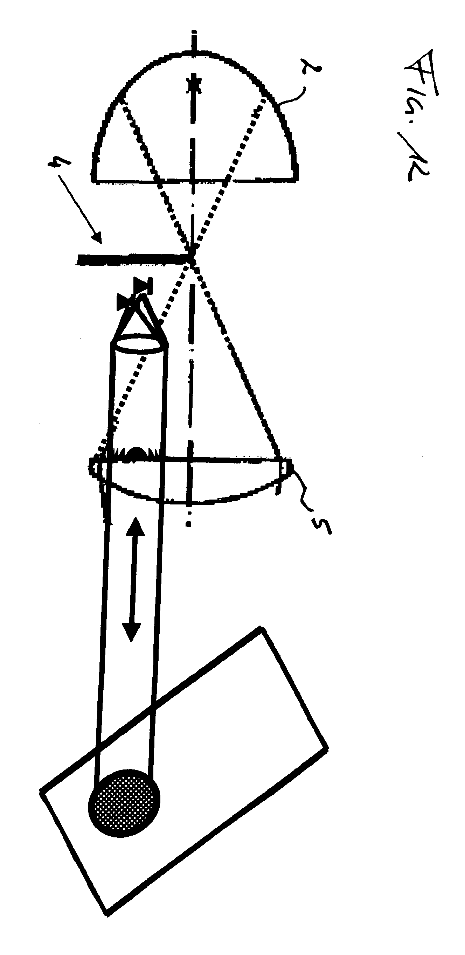

Ebenfalls mit einem Infrarot-Laser 10' in Verbindung mit einem CGH 17e und einem Detektor 15 lässt sich auch Regen oder Schnee detektieren. Dabei wird das Licht auf die Abdeckscheibe gelenkt (Fig. 12). Sowohl die Wassertropfen des Regens als auch Schneekristalle verändern die Reflektion an der Abdeckscheibe 13. Dieses Signal kann von einem Bordcomputer genutzt werden, um z. B. automatisch die Scheibenwischer zu betätigen.

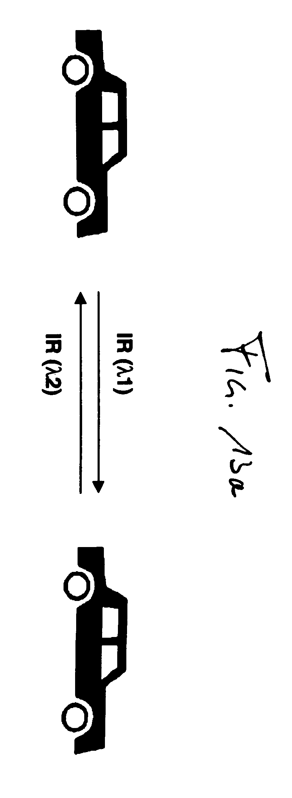

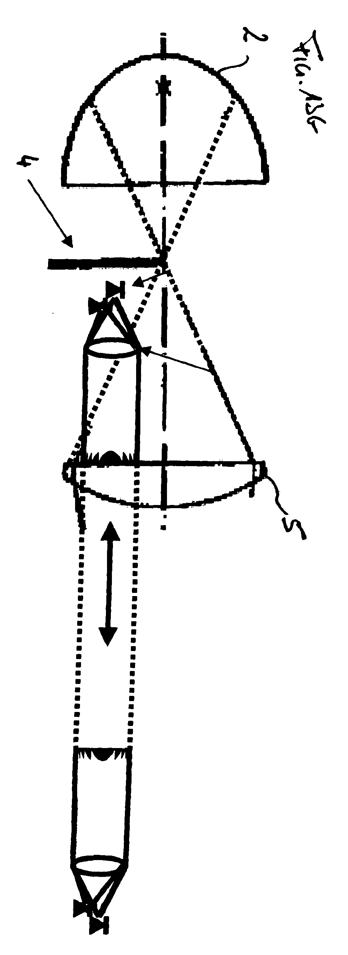

Abschließend sei anhand der Figuren 13a, b auch ein komplexeres Anwendungsbeispiel dargestellt: Sowohl in den Scheinwerfern des hinteren Autos A als auch in den Rücklichtern des vorderen Autos B sind Transceiver 19 eingebaut, die bei zwei unterschiedlichen Wellenlängen λ1, λ2 senden und empfangen, um optisches Übersprechen zu reduzieren. Dazu werden wiederum Infrarot-Laser 10' verwendet, deren Licht mit Hilfe einer Mikrooptik 11 in Form einer Linse aufbereitet wird und durch das CGH 17f austritt bzw. durch ein entsprechendes CGH 17f wieder in eine Beleuchtungseinrichtung eintritt und dort durch eine entsprechende Mikrooptik 11 auf einen Detektor fokusiert wird. Über diese Möglichkeit der optischen Datenkommunikation können zwischen verschiedenen Autos telemetrische Daten oder auch Geschwindigkeit, Beschleunigung und Bremsstärke des jeweiligen Autos übertragen werden. Diese Informationen lassen sich wieder beispielsweise über einen Bordcomputer auswerten und für eine Erhöhung der Fahrsicherheit nutzen.

Aus Kostengründen bestehen die meisten der hier dargestellten Linsen aus Polymethylmethacrylat (PMMA) oder Polycarbonat (PC). Am teuersten ist die Verwendung von Polymethylmethacrylimid (PMMI). Dies weist allerdings die beste Temperaturbeständigkeit auf. Vereinzelt sind die Linsen auch aus Polystyrol (PS), Poly(styrol-co-acrylnitril) (SAN), Cycloolefincopolymer (COC) oder Cycloolefinpolymer (COP) oder auch Methylpentencopolymer (PMP) oder auch Polyethylenterephthalat (PET). Die durch Pressen hergestellten Linsen, wie sie in Figur 5 und 7 dargestellt sind, bestehen aus einem oxidischen bzw. einem silikatischen Multikomponentenglas.

## Patentansprüche

1. Beleuchtungseinrichtung (1), insbesondere für den Automobilbereich, mit einer Lichtquelle (3), einer Linse (5), die auf mindestens einer ihrer Flächen eine diffraktive Struktur aufweist, und einer zwischen Lichtquelle (3) und Linse (5) angeordneten Blende (4), **dadurch gekennzeichnet, dass** die diffraktive Struktur im Wesentlichen im nicht abgeblendeten Bereich der Linse (5) angeordnet ist.

2. Beleuchtungseinrichtung nach Anspruch 1, **dadurch gekennzeichnet, dass** die diffraktive Struktur auf der der Lichtquelle (3) zugewandten Fläche der Linse (5) angeordnet ist.

3. Beleuchtungseinrichtung nach Anspruch 1 oder 2, **dadurch gekennzeichnet, dass** die Linse (5) auf der der Lichtquelle (3) zugewandten Seite plan und auf der der Lichtquelle (3) abgewandten Seite konvex ist.

4. Beleuchtungseinrichtung nach einem der Ansprüche 1 bis 3, **dadurch gekennzeichnet, dass** die Fläche (8) der diffraktiven Struktur im Wesentlichen der Fläche eines Halbkreises entspricht.

5. Beleuchtungseinrichtung nach einem der Ansprüche 1 bis 3, **dadurch gekennzeichnet, dass** die Fläche (8) der diffraktiven Struktur der Fläche eines halben Kreisringes entspricht.

6. Beleuchtungseinrichtung nach einem der Ansprüche 1 bis 5, **dadurch gekennzeichnet, dass** die Flächenkontur der diffraktiven Struktur dem Kantenverlauf der Blende (4) angepasst ist.

7. Beleuchtungseinrichtung nach einem der Ansprüche 1 bis 6, **dadurch gekennzeichnet, dass** die Linse (5) im abgeblendeten Bereich ein computergeneriertes Hologramm (17a -f) aufweist.

8. Beleuchtungseinrichtung nach einem der Ansprüche 1 bis 7, **dadurch gekennzeichnet, dass** die Lichtquelle (3) in einem Reflektor (2) angeordnet ist.

9. Linse für eine Beleuchtungseinrichtung gemäß Anspruch 1 bis 8, die auf ihrer Oberfläche eine diffraktive Struktur aufweist, **dadurch gekennzeichnet, dass** die Fläche (8) der diffraktiven Struktur der Fläche eines Halbkreises entspricht.

10. Linse für eine Beleuchtungseinrichtung gemäß Anspruch 1 bis 8, die auf ihrer Oberfläche eine diffraktive Struktur aufweist, **dadurch gekennzeichnet, dass** die Fläche (8') der diffraktiven Struktur der Fläche eines halben Kreisringes entspricht.

11. Linse nach Anspruch 7 oder 8, **dadurch gekennzeichnet, dass** sie auf der einen Seite plan und auf der anderen Seite konvex ausgebildet ist.

12. Linse nach einem der Ansprüche 7 bis 9, **dadurch gekennzeichnet, dass** die diffraktive Struktur auf der planen Seite der Linse angeordnet ist.

13. Linse nach einem der Ansprüche 9 bis 12, **dadurch gekennzeichnet, dass** die Linse im Bereich (9) ohne diffraktive Struktur ein computergeneriertes Hologramm (17a - f) aufweist.

14. Verfahren zur Herstellung einer Linse nach einem der Ansprüche 9 bis 13 durch einmaliges Pressen eines Glasposten.
